(19) Europäisches Patentamt
European Patent Office
Office européen des brevets

(11) EP 3 029 432 A1

(12) EUROPÄISCHE PATENTANMELDUNG

(43) Veröffentlichungstag:
08.06.2016 Patentblatt 2016/23

(51) Int Cl.:
*G01F 23/14* (2006.01) *A47L 15/44* (2006.01)
*D06F 39/02* (2006.01)

(21) Anmeldenummer: 15189721.2

(22) Anmeldetag: 14.10.2015

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA

(30) Priorität: 03.11.2014 DE 102014115972

(71) Anmelder: Miele & Cie. KG
33332 Gütersloh (DE)

(72) Erfinder:
• Günther, Maas
  33332 Gütersloh (DE)
• Beier, Dominic
  33332 Gütersloh (DE)

(54) **VERFAHREN UND VORRICHTUNG ZUM BESTIMMEN EINES FÜLLSTANDS EINER FLÜSSIGKEIT IN EINEM VORRATSBEHÄLTER FÜR EIN HAUSHALTSGERÄT, HAUSHALTSGERÄT UND MOBILES ENDGERÄT**

(57) Die Erfindung betrifft ein Verfahren zum Bestimmen eines Füllstands einer Flüssigkeit in einem Vorratsbehälter (104) für ein Haushaltsgerät (102). Dazu wird eine Information (108) über eine Dichte der Flüssigkeit eingelesen und der Füllstand unter Verwendung der Information (108) über die Dichte der Flüssigkeit ermittelt.

Fig. 1

**Beschreibung**

Die Erfindung bezieht sich auf ein Verfahren zum Bestimmen eines Füllstands einer Flüssigkeit in einem Vorratsbehälter für ein Haushaltsgerät, auf eine entsprechende Vorrichtung, auf ein entsprechendes Computerprogramm, auf ein Haushaltsgerät, auf ein mobiles Endgerät sowie auf ein System zum Bestimmen eines Füllstands einer Flüssigkeit in einem Vorratsbehälter für ein Haushaltsgerät.

Um einen korrekten Betrieb eines Haushaltsgeräts zu gewährleisten, ist es sinnvoll einen Füllstand eines Reinigungs- oder Pflegemittels in einem Vorratsbehälter eines Haushaltsgeräts wie etwa einer Wasch- oder Spülmaschine zu kenn. Der Füllstand kann unter Berücksichtigung eines hydrostatischen Drucks des Mittels bestimmt werden.

Vor diesem Hintergrund werden mit dem hier vorgestellten Ansatz ein verbessertes Verfahren zum Bestimmen eines Füllstands einer Flüssigkeit in einem Vorratsbehälter für ein Haushaltsgerät, eine verbessertes Vorrichtung, die dieses Verfahren verwendet, ein entsprechendes Computerprogramm, ein verbessertes Haushaltsgerät, ein verbessertes mobiles Endgerät sowie ein verbessertes System zum Bestimmen eines Füllstands einer Flüssigkeit in einem Vorratsbehälter für ein Haushaltsgerät gemäß den Hauptansprüchen vorgestellt. Vorteilhafte Ausgestaltungen ergeben sich aus den jeweiligen Unteransprüchen und der nachfolgenden Beschreibung.

Der hier vorgeschlagene Ansatz schafft ein Verfahren zum Bestimmen eines Füllstands einer Flüssigkeit in einem Vorratsbehälter für ein Haushaltsgerät, wobei das Verfahren folgende Schritte umfasst:

Einlesen einer Information über eine Dichte der Flüssigkeit; und

Ermitteln des Füllstands unter Verwendung der Information über die Dichte der Flüssigkeit.

Eine Flüssigkeit kann etwa ein Wäschepflegemittel oder ein sonstiges Reinigungs- oder Pflegemittel sein. Unter einem Haushaltsgerät kann beispielsweise eine Waschmaschine, eine Spülmaschine oder ein Wäschetrockner verstanden werden. Unter einer Information kann beispielsweise ein Signal verstanden werden, das Daten bezüglich der Dichte umfasst.

Der hier vorgestellte Ansatz beruht auf der Erkenntnis, dass ein Füllstand eines Reinigungsmittels in einem Haushaltsgerät unter Berücksichtigung einer jeweiligen Dichte des Reinigungsmittels gemessen werden kann. Dadurch kann der Füllstand sehr genau ermittelt werden und es können Messfehler vermieden werden, wenn Flüssigkeiten unterschiedlicher Dichte in das Haushaltsgerät eingefüllt werden.

Beispielsweise ist es bei der Verwendung von Einwegbehältern in Waschmaschinen besonders wichtig, eine möglichst exakte Leermeldung auszugeben, da einerseits nicht ohne Wäschepflegemittel gewaschen werden soll und andererseits aus Umweltschutzgründen eine möglichst geringe Restmenge im Einwegbehälter verbleiben soll. Bei der Verwendung wiederbefüllbarer Behälter ist es hingegen wichtig, die Leermeldung rechtzeitig auszugeben, sodass nicht ohne Wäschepflegemittel gewaschen wird. Die Restmenge ist hier nachrangig, da der Behälter ohnehin aufgefüllt wird.

Durch die Berücksichtigung einer individuellen Dichte des verwendeten Wäschepflegemittels kann nun die Genauigkeit bei der Messung des Füllstands und damit die Genauigkeit der Leermeldung deutlich verbessert werden.

Es ist vorteilhaft, wenn im Schritt des Einlesens ferner eine Information über einen hydrostatischen Druck der Flüssigkeit eingelesen wird. Zusätzlich oder alternativ kann eine Information über eine Fallbeschleunigung eingelesen werden. Je nach Ausführungsform kann nun im Schritt des Ermittelns der Füllstand ferner unter Verwendung der Information über den hydrostatischen Druck oder der Information über die Fallbeschleunigung ermittelt werden. Auf diese Weise lässt sich der Füllstand mit geringem technischem Aufwand zuverlässig ermitteln.

Dabei kann im Schritt des Ermittelns ein Produkt unter Verwendung der Information über die Dichte gebildet werden. Zusätzlich oder alternativ kann das Produkt unter Verwendung der Information über die Fallbeschleunigung gebildet werden. Aus dem Produkt und der Information über den hydrostatischen Druck kann dann ein den Füllstand repräsentierender Quotient gebildet werden. Dadurch kann der Füllstand schnell und ressourcensparend berechnet werden.

Die Genauigkeit des Verfahrens lässt sich weiter erhöhen, wenn im Schritt des Einlesens ferner eine Information über einen Umgebungsdruck einer Außenumgebung des Vorratsbehälters eingelesen wird. Im Schritt des Ermittelns kann der Füllstand ferner unter Verwendung der Information über den Umgebungsdruck ermittelt werden, beispielsweise indem der Umgebungsdruck zu dem hydrostatischen Druck addiert wird.

Gemäß einer weiteren Ausführungsform kann im Schritt des Einlesens die Information über die Dichte über eine Schnittstelle zu einem mobilen Endgerät, etwa einem Smartphone, einem Tablet-PC oder einem Laptop, eingelesen werden. Zusätzlich oder alternativ kann die Information über die Dichte über eine Schnittstelle zu einer zentralen Datenbank oder einer Bedieneinheit des Haushaltsgeräts eingelesen werden. Unter einer zentralen Datenbank kann ein beispielsweise über eine Internetverbindung zugänglicher Server verstanden werden, auf dem eine Vielzahl von Dichtewerten unterschiedlicher Flüssigkeiten abgespeichert ist. Unter einer Bedieneinheit kann ein Eingabegerät verstanden werden, das der manuellen Eingabe oder Auswahl von Dichtewerten dient. Auf diese Weise kann sichergestellt werden, dass stets eine möglichst aktuelle Information über die Dichte zur Ermittlung des Füllstands verwendet wird.

Es kann im Schritt des Ermittelns der Füllstand unter Verwendung eines vorbestimmten Dichtewerts bestimmt werden, wenn im Schritt des Einlesens keine Information über die Dichte oder eine fehlerhafte Information über die Dichte eingelesen wird. Der vorbestimmte Dichtewert kann beispielsweise möglichst hoch gewählt werden, sodass ein ermittelter Füllstand niedriger als ein tatsächlicher Füllstand sein kann. Dadurch ist sichergestellt, dass auch bei Messfehlern eine ausreichende Flüssigkeitsmenge im Vorratsbehälter verbleibt.

Das Verfahren kann mit einem Schritt des Ausgebens eines Meldesignals zum Melden eines niedrigen Füllstands vorgesehen sein, wenn im Schritt des Ermittelns ermittelt wird, dass der Füllstand eine vorbestimmte Mindesthöhe unterschreitet. Zusätzlich oder alternativ kann im Schritt des Ausgebens ein Dosiersignal zum Bestimmen einer Dosiermenge der Flüssigkeit in Abhängigkeit von einem im Schritt des Ermittelns ermittelten Füllstand ausgegeben werden. Die vorbestimmte Mindesthöhe kann beispielsweise 5, 10 oder 20 Prozent eines Fassungsvolumens des Vorratsbehälters entsprechen. Mithilfe des Meldesignals kann ein Nutzer des Haushaltsgeräts rechtzeitig zum Wiederbefüllen des Vorratsbehälters aufgefordert werden. Mithilfe des Dosiersignals kann ein Flüssigkeitsverbrauch des Haushaltsgeräts in Abhängigkeit von einer im Vorratsbehälter vorhandenen Flüssigkeitsmenge gesteuert werden.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird. Das Computerprogrammprodukt kann als Software zur Kompensation von Dichtemessfehlern realisiert sein.

Der hier vorgeschlagene Ansatz schafft ferner eine Vorrichtung zum Bestimmen eines Füllstands einer Flüssigkeit in einem Vorratsbehälter für ein Haushaltsgerät, wobei die Vorrichtung folgende Merkmale aufweist:

eine Einleseeinheit zum Einlesen einer Information über eine Dichte der Flüssigkeit; und

eine Ermittlungseinheit zum Ermitteln des Füllstands unter Verwendung der Information über die Dichte der Flüssigkeit.

Unter einer Vorrichtung kann vorliegend ein elektrisches Gerät verstanden werden, das Sensorsignale verarbeitet und in Abhängigkeit davon Steuer- und/oder Datensignale ausgibt.

Des Weiteren schafft der vorgeschlagene Ansatz ein Haushaltsgerät mit folgenden Merkmalen:

zumindest einem Vorratsbehälter zum Bevorraten einer Flüssigkeit; und

einer Vorrichtung gemäß einer hier beschriebenen Ausführungsform.

Das Haushaltsgerät kann mit einer Messeinrichtung vorgesehen sein, die ausgebildet ist, um je nach Ausführungsform eine Information über einen hydrostatischen Druck der Flüssigkeit und, zusätzlich oder alternativ, eine Information über einen Umgebungsdruck einer Außenumgebung des Vorratsbehälters bereitzustellen. Entsprechend kann die Vorrichtung ausgebildet sein, um den Füllstand der Flüssigkeit unter Verwendung der Information über den hydrostatischen Druck oder der Information über den Umgebungsdruck zu ermitteln.

Gemäß einer weiteren Ausführungsform kann das Haushaltsgerät eine Bedieneinheit zur manuellen Eingabe oder Auswahl einer Information über eine Dichte der Flüssigkeit aufweisen. Zusätzlich oder alternativ kann das Haushaltsgerät mit einer Kommunikationseinheit ausgeführt sein, die ausgebildet ist, um die Information über die Dichte von einem mobilen Endgerät oder einer zentralen Datenbank zu empfangen.

Der hier vorgestellte Ansatz schafft zudem ein mobiles Endgerät mit folgenden Merkmalen:

einer Empfangseinheit, die ausgebildet ist, um ein Erkennungssignal zum Erkennen einer Flüssigkeit in einem Vorratsbehälter für ein Haushaltsgerät zu empfangen; und

einer Übertragungseinheit, die ausgebildet ist, um unter Verwendung des Erkennungssignals eine Information über eine Dichte der Flüssigkeit an das Haushaltsgerät zu übertragen.

Um die Information über die Dichte ortsunabhängig möglichst aktuell zu halten, kann die Übertragungseinheit ausgebildet sein, um die Information über die Dichte von einer zentralen Datenbank zu empfangen.

Schließlich schafft der vorgestellte Ansatz ein System zum Bestimmen eines Füllstands einer Flüssigkeit in einem Vorratsbehälter für ein Haushaltsgerät, wobei das System folgende Merkmale aufweist:

ein Haushaltsgerät gemäß einer der hier beschriebenen Ausführungsformen; und

ein mobiles Endgerät gemäß einer der hier beschriebenen Ausführungsformen, wobei die Kommunikationseinheit des Haushaltsgeräts mit der Übertragungseinheit des mobilen Endgeräts verbunden ist.

Ein Ausführungsbeispiel der Erfindung ist in den Zeichnungen rein schematisch dargestellt und wird nachfolgend näher beschrieben. Es zeigt

Figur 1 eine schematische Darstellung eines Systems zum Bestimmen eines Füllstands gemäß einem Ausführungsbeispiel der vorliegenden Erfindung;

Figur 2 eine schematische Darstellung eines Vorratsbehälters mit einer Messeinrichtung gemäß einem Ausführungsbeispiel der vorliegenden Erfindung;

Figur 3 eine schematische Darstellung einer Vorrichtung zum Bestimmen eines Füllstands gemäß einem Ausführungsbeispiel der vorliegenden Erfindung; und

Figur 4 ein Ablaufdiagramm eines Verfahrens zum Bestimmen eines Füllstands gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

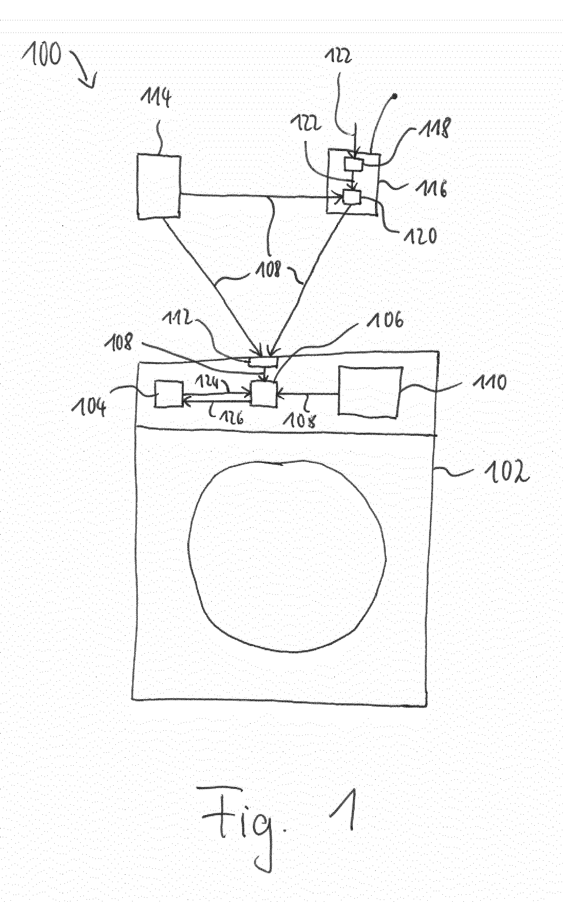

Fig. 1 zeigt eine schematische Darstellung eines Systems 100 zum Bestimmen eines Füllstands gemäß einem Ausführungsbeispiel der vorliegenden Erfindung. Das System 100 umfasst ein Haushaltsgerät 102, hier eine Waschmaschine, mit einem Vorratsbehälter 104 und einer Vorrichtung 106. Der Vorratsbehälter 104 enthält eine Flüssigkeit, beispielsweise ein Wäschepflegemittel. Die Vorrichtung 106 ist ausgebildet, um eine Information 108 über eine Dichte des Wäschepflegemittels einzulesen und unter Verwendung der Information 108 über die Dichte einen Füllstand des Wäschepflegemittels zu bestimmen.

Gemäß diesem Ausführungsbeispiel weist das Haushaltsgerät 102 eine Bedieneinheit 110 auf, die der Eingabe oder Auswahl der Information 108 über die Dichte durch einen Nutzer des Haushaltsgeräts 102 dient. Dabei ist die Vorrichtung 106 ausgebildet, um die Information 108 über die Dichte von der Bedieneinheit 110 zu empfangen.

Das Haushaltsgerät 102 ist ferner mit einer Kommunikationseinheit 112 realisiert, die ausgebildet ist, um die Information 108 über die Dichte von einer zentralen Datenbank 114 zu empfangen und an die Vorrichtung 106 weiterzuleiten. Die zentrale Datenbank 114 ist beispielsweise ausgebildet, um die Information 108 über die Dichte über eine Internetverbindung an die Kommunikationseinheit 112 zu übertragen.

Gemäß dem in Fig. 1 gezeigten Ausführungsbeispiel umfasst das System 100 weiterhin ein mobiles Endgerät 116, das wie die zentrale Datenbank 114 ausgebildet ist, um die Information 108 über die Dichte, etwa über eine Mobilfunk- oder eine Internetverbindung, an die Kommunikationseinheit 112 zu senden. Dazu weist das mobile Endgerät 116, beispielsweise ein Smartphone, ein Tablett-PC oder ein Laptop, eine Empfangseinheit 118 sowie eine Übertragungseinheit 120 auf. Die Empfangseinheit 118 ist ausgebildet, um ein Erkennungssignal 122 zu empfangen, durch das das in dem Vorratsbehälter 104 bevorratete Wäschepflegemittel eindeutig identifiziert wird. Das Erkennungssignal 122 kann beispielsweise von einer Kamera des mobilen Endgeräts 116 bereitgestellt werden. Ferner ist die Empfangseinheit 118 ausgebildet, um das Erkennungssignal 122 an die Übertragungseinheit 120 zu senden, wobei die Übertragungseinheit 120 ausgebildet ist, um unter Verwendung des Erkennungssignals 122 die Information 108 über die Dichte bereitzustellen und an die Kommunikationseinheit 112 zu übertragen. Die Information 108 über die Dichte kann beispielsweise in dem mobilen Endgerät 116 abgespeichert sein und ansprechend auf das Empfangen des Erkennungssignals 122 dem anhand des Erkennungssignals 122 erkannten Wäschepflegemittel zugeordnet werden.

Die Übertragungseinheit 120 ist beispielsweise ausgebildet, um die Information 108 über die Dichte von der zentralen Datenbank 114 zu empfangen. Die Information 108 über die Dichte kann beispielsweise in Echtzeit ansprechend auf das Empfangen des Erkennungssignals 122 von der zentralen Datenbank 114 heruntergeladen werden. Je nach Ausführungsform kann alternativ oder zusätzlich in regelmäßigen Abständen ein Datenabgleich zwischen der zentralen Datenbank 114 und der Übertragungseinheit 120 erfolgen, um die in dem mobilen Endgerät 116 abgespeicherten Dichtewerte auf dem neuesten Stand zu halten.

Die Vorrichtung 106 kann ausgebildet sein, um von einem an dem Vorratsbehälter 104 angeordneten Drucksensor eine Information 124 über einen hydrostatischen Druck des Wäschepflegemittels in dem Vorratsbehälter 104 zu empfangen und den Füllstand des Wäschepflegemittels unter Verwendung der Information 124 über den hydrostatischen Druck zu ermitteln. Denkbar ist auch, dass die Vorrichtung 106 bei der Ermittlung des Füllstands zusätzlich zum hydrostatischen Druck des Wäschepflegemittels einen Umgebungsdruck einer Außenumgebung des Vorratsbehälters 104 berücksichtigt.

Gemäß diesem Ausführungsbeispiel ist die Vorrichtung 106 ausgebildet, um ansprechend auf das Ermitteln des Füllstands ein Dosiersignal 126 an eine Dosiereinrichtung des Haushaltsgeräts 102 auszugeben, die dazu dient, unter Verwendung des Dosiersignals 126 eine Dosierung des Wäschepflegemittels in Abhängigkeit von dem ermittelten Füllstand zu steuern.

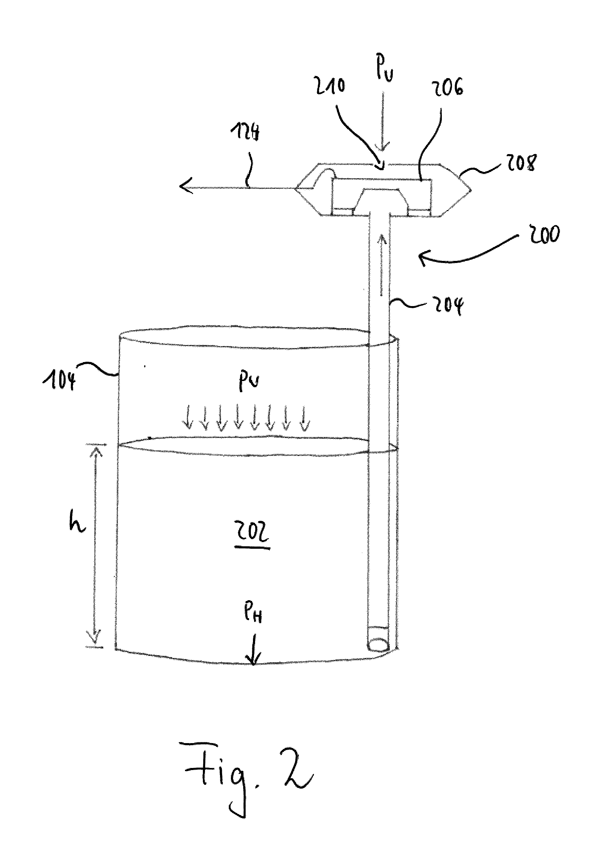

Fig. 2 zeigt eine schematische Darstellung eines Vorratsbehälters 104 mit einer Messeinrichtung 200 gemäß einem Ausführungsbeispiel der vorliegenden Erfindung. Bei dem Vorratsbehälter 104 handelt es sich beispielsweise um einen Vorratsbehälter, wie er anhand von Fig. 1 beschrieben ist. Der hier beispielhaft zylinderförmig dargestellte Vorratsbehälter 104 ist mit einer Flüssigkeit 202 befüllt, hier dem Wäschepflegemittel. Die Flüssigkeit 202 weist einen Füllstand h auf, der beispielhaft etwa zwei Dritteln eines Fassungsvolumens des Vorratsbehälters 104 entspricht. Auf die Flüssigkeit 202 wirkt ein Umgebungsdruck $p_U$. Zu dem Umgebungsdruck $p_U$ addiert sich ein zu dem Füllstand h proportionaler hydrostatischer Druck $p_H$ der Flüssigkeit 202.

Gemäß diesem Ausführungsbeispiel ist die Messeinrichtung 200 mit einer geraden Röhre 204 ausgebildet, die bis auf einen Boden des Vorratsbehälters 104 reicht. An einem freien Ende der Röhre 204 ist ein Sensorelement 206 angeordnet. Das Sensorelement 206 ist in einem Gehäuse 208 angeordnet, das durch eine dem Sensorelement 206 gegenüberliegende Gehäuseöffnung 210 fluidisch mit der Außenumgebung des Vorratsbehälters 104 gekoppelt ist. Somit wird das Sensorelement 206 einerseits über die Gehäuseöffnung 210 mit dem Umgebungsdruck $p_U$, andererseits über die Röhre 204 mit einem einer Summe aus dem hydrostatischen Druck $p_H$ und dem Umgebungsdruck $p_U$ entsprechenden Röhrendruck beaufschlagt. Das Sensorelement 206 ist ausgebildet, um in Abhängigkeit von einer Druckdifferenz zwischen dem Umgebungsdruck $p_U$ und dem Röhrendruck die Information 124 über den hydrostatischen Druck $p_H$ bereitzustellen.

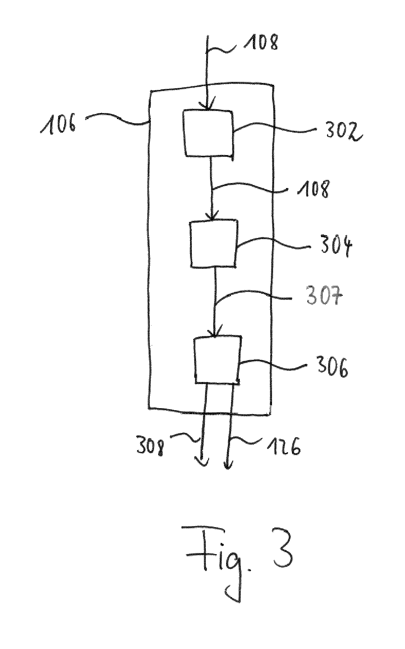

Fig. 3 zeigt eine schematische Darstellung einer Vorrichtung 106 zum Bestimmen eines Füllstands gemäß einem Ausführungsbeispiel der vorliegenden Erfindung. Bei der Vorrichtung 106 handelt es sich beispielsweise um die anhand von Fig. 1 beschriebene Vorrichtung. Die Vorrichtung 106 umfasst eine Einleseeinheit 302, die ausgebildet ist, um die Information 108 über die Dichte einzulesen und an eine Ermittlungseinheit 304 weiterzuleiten. Die Ermittlungseinheit 304 ist ausgebildet, um unter Verwendung der Information 108 über die Dichte den Füllstand der Flüssigkeit in dem Vorratsbehälter zu ermitteln.

Gemäß einem Ausführungsbeispiel umfasst die Vorrichtung 106 zusätzlich eine Ausgabeeinheit 306, die ausgebildet ist, um von der Ermittlungseinheit 304 eine Information 307 über einen ermittelten Füllstand zu empfangen und unter Verwendung der Information 307 ein Meldesignal 308 zum Melden eines niedrigen Füllstands auszugeben, wenn die Information 307 einen Füllstand repräsentiert, der eine vorbestimmte Mindesthöhe unterschreitet. Je nach Ausführungsform ist die Ausgabeeinheit 306 alternativ oder zusätzlich ausgebildet, um unter Verwendung der Information 307 das Dosiersignal 126 zum Bestimmen einer Dosiermenge der Flüssigkeit in Abhängigkeit von dem Füllstand auszugeben.

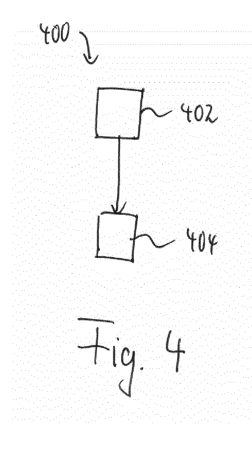

Fig. 4 zeigt ein Ablaufdiagramm eines Verfahrens 400 zum Bestimmen eines Füllstands gemäß einem Ausführungsbeispiel der vorliegenden Erfindung. Das Verfahren 400 kann beispielsweise von einer Vorrichtung, wie sie anhand der Figuren 1 bis 3 beschrieben ist, durchgeführt werden. Das Verfahren umfasst einen Schritt 402, in dem die Information über die Dichte der Flüssigkeit eingelesen wird. Hierauf wird in einem weiteren Verfahrensschritt 404 unter Verwendung der Information über die Dichte der Füllstand der Flüssigkeit in dem Vorratsbehälter des Haushaltsgeräts ermittelt.

Gemäß einem Ausführungsbeispiel kann im Schritt 404 des Ermittelns die Information der Dichte unter Verwendung der folgenden Gleichung ermittelt werden:

$$p_H = \rho_{Fl} \cdot g \cdot h$$

Dabei steht

$p_H$ für den hydrostatischen Druck der Flüssigkeit,
$\rho_{Fl}$ für die Dichte der Flüssigkeit,
$g$ für eine Fallbeschleunigung (beispielsweise 9,81 m/s$^2$) und
$h$ für eine Höhe der Flüssigkeitssäule, d. h. den Füllstand.

Ist $\rho_{Fl}$ konstant, so folgt daraus, dass $p_H$ proportional zu h ist.

Vorteilhafterweise kann ein in einer Waschmaschine auftretender Dichtemessfehler rechnerisch kompensiert werden, wenn die Dichte des verwendeten Wäschepflegemittels bekannt ist.

Um das Wäschepflegemittel sinnvoll automatisch zu dosieren, kann der Waschmaschine mitgeteilt werden, welches Wäschepflegemittel sich in einem zugeordneten Behälter befindet.

Gemäß einem Ausführungsbeispiel erfolgt dies dadurch, dass in einem Gerätemenü das verwendete Wäschepflegemittel angewählt wird. Wird etwa bei der Produktion der Waschmaschine zusätzlich zum Wäschepflegemittel im Menü die Dichte des entsprechenden Wäschepflegemittels im Speicher abgelegt, so kann der Dichtemessfehler rechnerisch kompensiert werden. Hierbei liegt beispielsweise für alle Wäschepflegemittel, die in Einwegbehältern geliefert werden, ein entsprechender Dichtewert in der Waschmaschine vor. Es können jedoch auch Dichtewerte für Flüssigkeiten aus anderen Behältern hinterlegt sein.

Da bei Änderungen in der Rezeptur der Wäschepflegemittel Änderungen in der Dichte nicht ausgeschlossen sind, können die Dichtedaten updatefähig sein.

Alternativ wird mithilfe einer Smartphone-App ein Barcode oder ein QR-Code auf einem Etikett des Wäschepflegemittels ausgelesen. Der Code fungiert somit als ein Erkennungssignal, wie es anhand von Fig. 1 beschrieben ist. Die App ist beispielsweise ausgebildet, um mithilfe des Codes über einen Server, etwa der zentralen Datenbank aus Fig. 1, den entsprechenden Dichtewert des verwendeten Wäschepflegemittels abzurufen und diesen der Waschmaschine mitzuteilen. Dies kann beispielsweise über ein Heimnetzwerk erfolgen, in dem die Waschmaschine und das Smartphone miteinander verbunden sind.

Vorteilhaft ist bei dieser Vorgehensweise, dass der Dichtewert auch bei Änderungen in der Rezeptur der Wäschepflegemittel stets aktuell ist. Außerdem erübrigt sich dadurch die Eingabe des Wäschepflegemittels im Gerätemenü. Beispielsweise wird über das Gerätemenü lediglich angeben, in welchen Einschub der Waschmaschine der Vorratsbehälter eingeschoben wird.

Schließlich ist es möglich, dass die Dichtewerte für die verwendeten Wäschepflegemittel von einem Gerätenutzer selbst ermittelt und am Gerät eingegeben werden. Dazu kann am Gerät ein geeignetes Menü bereitgestellt werden.

Sollte trotz allem im Gerät für ein verwendetes Wäschepflegemittel kein Dichtewert hinterlegt sein oder das Wäschepflegemittel dem Gerät gänzlich unbekannt sein, so kann im Schritt des Ermittelns automatisch mit dem höchsten bekannten Dichtewert kompensiert werden. So ergibt sich zwar bei einer Leermeldung eine größere Restmenge, was aber tolerierbar ist, da es sich dann mit großer Wahrscheinlichkeit um einen wiederbefüllbaren Vorratsbehälter handelt, der ohnehin aufgefüllt wird.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (400) zum Bestimmen eines Füllstands (h) einer Flüssigkeit (202) in einem Vorratsbehälter (104) für ein Haushaltsgerät (102), wobei das Verfahren (400) folgende Schritte umfasst:

   Einlesen (402) einer Information (108) über eine Dichte der Flüssigkeit (202); und
   Ermitteln (404) des Füllstands (h) unter Verwendung der Information (108) über die Dichte der Flüssigkeit (202).

2. Verfahren (400) gemäß Anspruch 1, **dadurch gekennzeichnet, dass** im Schritt des Einlesens (402) ferner eine Information (124) über einen hydrostatischen Druck ($p_H$) der Flüssigkeit (202) und/oder eine Information über eine Fallbeschleunigung eingelesen wird, wobei im Schritt des Ermittelns (404) der Füllstand (h) ferner unter Verwendung der Information (124) über den hydrostatischen Druck ($p_H$) und/oder der Information über die Fallbeschleunigung ermittelt wird.

3. Verfahren (400) gemäß Anspruch 2, **dadurch gekennzeichnet, dass** im Schritt des Ermittelns (404) ein Produkt unter Verwendung der Information (108) über die Dichte und/oder der Information über die Fallbeschleunigung gebildet wird, wobei aus dem Produkt und der Information (124) über den hydrostatischen Druck ($p_H$) ein den Füllstand (h) repräsentierender Quotient gebildet wird.

4. Verfahren (400) gemäß einem der vorangegangenen Ansprüche, **dadurch gekennzeichnet, dass** im Schritt des Einlesens (402) ferner eine Information über einen Umgebungsdruck ($p_U$) einer Außenumgebung des Vorratsbehälters (104) eingelesen wird, wobei im Schritt des Ermittelns (404) der Füllstand (h) ferner unter Verwendung der Information über den Umgebungsdruck ($p_U$) ermittelt wird.

5. Verfahren (400) gemäß einem der vorangegangenen Ansprüche, **dadurch gekennzeichnet, dass** im Schritt des Einlesens (402) die Information (108) über die Dichte über eine Schnittstelle zu einem mobilen Endgerät (116) und/oder einer zentralen Datenbank (114) und/oder einer Bedieneinheit (110) des Haushaltsgeräts (102) eingelesen wird.

6. Verfahren (400) gemäß einem der vorangegangenen Ansprüche, **dadurch gekennzeichnet, dass** im Schritt des Ermittelns (404) der Füllstand (h) unter Verwendung eines vorbestimmten Dichtewerts bestimmt wird, wenn im Schritt des Einlesens (402) keine Information (108) über die Dichte und/oder eine fehlerhafte Information (108) über die Dichte eingelesen wird.

7. Verfahren (400) gemäß einem der vorangegangenen Ansprüche, **gekennzeichnet durch** einen Schritt des Ausgebens eines Meldesignals (308) zum Melden eines niedrigen Füllstands (h), wenn im Schritt des Ermittelns (404) ermittelt wird, dass der Füllstand (h) eine vorbestimmte Mindesthöhe unterschreitet, und/oder eines Dosiersignals (126) zum Bestimmen einer Dosiermenge der Flüssigkeit (202) in Abhängigkeit von einem im Schritt des Ermittelns (404) ermittelten Füllstand (h).

8. Computerprogramm, das dazu eingerichtet ist, alle Schritte eines Verfahrens (400) gemäß einem der Ansprüche 1 bis 7 durchzuführen.

**9.** Vorrichtung (106) zum Bestimmen eines Füllstands (h) einer Flüssigkeit (202) in einem Vorratsbehälter (104) für ein Haushaltsgerät (102), wobei die Vorrichtung (106) folgende Merkmale aufweist:

eine Einleseeinheit (302) zum Einlesen einer Information (108) über eine Dichte der Flüssigkeit (202); und
eine Ermittlungseinheit (304) zum Ermitteln des Füllstands (h) unter Verwendung der Information (108) über die Dichte der Flüssigkeit (202).

**10.** Haushaltsgerät (102) mit folgenden Merkmalen:

zumindest einem Vorratsbehälter (104) zum Bevorraten einer Flüssigkeit (202); und
einer Vorrichtung (106) gemäß Anspruch 9.

**11.** Haushaltsgerät (102) gemäß Anspruch 10, **gekennzeichnet durch** eine Messeinrichtung (200), die ausgebildet ist, um eine Information (124) über einen hydrostatischen Druck ($p_H$) der Flüssigkeit (202) und/oder eine Information über einen Umgebungsdruck ($p_U$) einer Außenumgebung des Vorratsbehälters (104) bereitzustellen, wobei die Vorrichtung (106) ausgebildet ist, um den Füllstand (h) der Flüssigkeit (202) unter Verwendung der Information (124) über den hydrostatischen Druck ($p_H$) und/oder der Information über den Umgebungsdruck ($p_U$) zu bestimmen.

**12.** Haushaltsgerät (102) gemäß Anspruch 10 oder 11, **gekennzeichnet durch** eine Bedieneinheit (110) zur manuellen Eingabe einer Information (108) über eine Dichte der Flüssigkeit (202) und/oder eine Kommunikationseinheit (112), die ausgebildet ist, um die Information (108) über die Dichte von einem mobilen Endgerät (116) und/oder einer zentralen Datenbank (114) zu empfangen.

**13.** Mobiles Endgerät (116) mit folgenden Merkmalen:

einer Empfangseinheit (118), die ausgebildet ist, um ein Erkennungssignal (122) zum Erkennen einer Flüssigkeit (202) in einem Vorratsbehälter (104) für ein Haushaltsgerät (102) zu empfangen; und
einer Übertragungseinheit (120), die ausgebildet ist, um unter Verwendung des Erkennungssignals (122) eine Information (108) über eine Dichte der Flüssigkeit (202) an das Haushaltsgerät (102) zu übertragen.

**14.** Mobiles Endgerät (116) gemäß Anspruch 13, **dadurch gekennzeichnet, dass** die Übertragungseinheit (120) ausgebildet ist, um die Information (108) über die Dichte von einer zentralen Datenbank (114) zu empfangen.

**15.** System (100) zum Bestimmen eines Füllstands (h) einer Flüssigkeit (202) in einem Vorratsbehälter (104) für ein Haushaltsgerät (102), wobei das System (100) folgende Merkmale aufweist:

ein Haushaltsgerät (102) gemäß Anspruch 12; und
ein mobiles Endgerät (116) gemäß Anspruch 13 oder 14, wobei die Kommunikationseinheit (112) des Haushaltsgeräts (102) mit der Übertragungseinheit (120) des mobilen Endgeräts (116) verbunden ist.

Fig. 1

Fig. 2

Fig. 3

Fig. 4

Europäisches
Patentamt

European
Patent Office

Office européen
des brevets

## EUROPÄISCHER RECHERCHENBERICHT

**Nummer der Anmeldung**

EP 15 18 9721

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 057832 A1 (NIRO PLAN AG [CH]) 4. Juni 2009 (2009-06-04) * das ganze Dokument * ----- | 1-15 | INV. G01F23/14 A47L15/44 D06F39/02 |
| A | DE 10 2010 029307 A1 (BSH BOSCH SIEMENS HAUSGERAETE [DE]) 1. Dezember 2011 (2011-12-01) * Absätze [0001] - [0005] * ----- | 1-15 | |

**RECHERCHIERTE SACHGEBIETE (IPC)**

G01F
A47L
D06F

Der vorliegende Recherchenbericht wurde für alle Patentansprüche erstellt

| Recherchenort | Abschlußdatum der Recherche | Prüfer |
|---|---|---|
| Den Haag | 29. April 2016 | Kloppenburg, Martin |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 9721

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2016

| Im Recherchenbericht angeführtes Patentdokument | Datum der Veröffentlichung | Mitglied(er) der Patentfamilie | Datum der Veröffentlichung |
|---|---|---|---|
| DE 102007057832 A1 | 04-06-2009 | DE 102007057832 A1<br>EP 2065685 A2<br>JP 2009133863 A<br>US 2009165477 A1 | 04-06-2009<br>03-06-2009<br>18-06-2009<br>02-07-2009 |
| DE 102010029307 A1 | 01-12-2011 | CN 103038412 A<br>DE 102010029307 A1<br>EA 201291239 A1<br>EP 2576884 A1<br>WO 2011147798 A1 | 10-04-2013<br>01-12-2011<br>30-09-2013<br>10-04-2013<br>01-12-2011 |

EPO FORM P0461

Für nähere Einzelheiten zu diesem Anhang : siehe Amtsblatt des Europäischen Patentamts, Nr.12/82